# EUROPEAN PATENT SPECIFICATION

(11) **EP 1 203 704 B1**
(45) Date of publication and mention of the grant of the patent: **21.09.2005**
(21) Application number: 01123310.3
(22) Date of filing: 08.10.2001
(51) Int. Cl.: B60R 22/46

(54) **Seat belt retractor**
Sicherheitsgurtaufroller
Prétensionneur de ceinture de sécurité

(30) Priority: 06.11.2000 JP 2000337391
(43) Date of publication of application: 08.05.2002
(73) Proprietor: TAKATA CORPORATION, Tokyo 106-8510 (JP)
(72) Inventor: Shiotani, Masahiro, Minato-ku, Tokyo 106-8510 (JP); Mishina, Joji, Minato-ku, Tokyo 106-8510 (JP); Kanamori, Yasushi, Minato-ku, Tokyo 106-8510 (JP)
(74) Representative: Banzer, Hans-Jörg

(56) References cited:
- EP-A- 0 773 147
- DE-A- 3 620 205
- DE-A- 10 008 824

## Description

The present invention relates to a seat belt retractor which winds up a seat belt for restraining an occupant to a vehicle seat. More particularly, the present invention relates to a seat belt retractor which achieves a more stable performance of a pretensioner, as described in the preamble of claim 1.

DE 100 08 824 describes a seat belt retractor according to the preamble of claim 1.

Vehicles such as automobiles are equipped with seat belt devices for restraining rapid movement of the occupants due to acceleration occurred at a vehicle collision to ensure the safety of occupants. Such a seat belt device includes a seat belt retractor which has a spool for winding a belt thereon and a spring for retracting the belt inside the seat belt retractor and locks the withdrawal of the belt when impact is applied, thereby restraining the occupant. In recent years, most of the seat belt retractors for vehicles are provided with pretensioners. The function of a pretensioner is applying tension to a seat belt to remove slack of the seat belt by rapidly rotating the spool in the belt-winding direction in the event of collision.

As an example of a seat belt retractor, the following will be referred.

Fig. 6 is an exploded perspective view showing one example of a seat belt retractor.

Fig. 7 is a sectional view, taken along the axis of a spool, showing a clutch mechanism portion of the seat belt retractor of Fig. 6.

It should be noted that the seat belt retractor shown in these drawings is now being developed and thus not known yet. In these drawings, some parts are not illustrated because these are not necessary for describing the present invention.

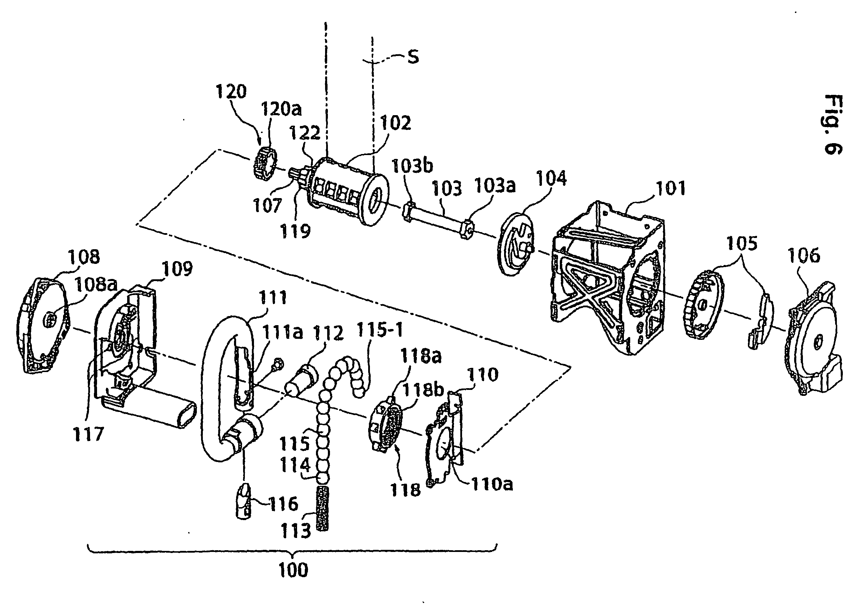

The seat belt retractor shown in Fig. 6 comprises the following components:
(1) a base 101;
(2) a spool 102 for winding a belt S thereon which is made of aluminium;
(3) a torsion bar 103 fixed to the spool 102 to extend along the axis of the spool 102;
(4) locking mechanisms 104, 105 which are arranged on one side (the right side in Fig. 6) of the base 101 to prevent the rotation of the spool 102 in the belt withdrawing direction during the emergency locking operation;
(5) a retainer 106 for supporting one end (the right end in Fig. 6) 103a of the torsion bar 103 via the locking mechanisms 104, 105;
(6) a pretensioner 100 which is arranged on the other side (the left side in Fig. 6) of the base 101 to rapidly rotate the spool 102 in the belt-winding direction in the event of a vehicle collision;
(7) a clutch mechanism comprising a pinion 120 fitted onto a spool gear 119 of the spool 102 and a ring gear 118 within the pretensioner 100; and
(8) a return spring 108 which is disposed on an outer surface of the pretensioner 100 to bias the spool 102 in the belt-winding direction.

The pretensioner 100 of the above (6) comprises the following components:
(6-1) a pipe 111;
(6-2) a pretensioner cover 109 made of aluminium and a pretensioner plate 110 made of steel which are arranged on both sides of the pipe 111;
(6-3) a gas generator 112 fixed at the proximal end of the pipe 111;
(6-4) a stopper spring 113, a piston 114, and a plurality of balls 115 which are arranged inside the pipe 111;
(6-5) a guide block 116 fitted in the other end (distal end) of the pipe 111.

In the seat belt retractor, the ring gear 118 is held to the pretensioner cover 109 by the pins 47 before the activation of the pretensioner 100. In this state, the ring gear 118 and the pinion 120 are out of mesh and have a predetermined clearance therebetween. Therefore, the spool 102 can freely rotate. When the gas generator 112 is activated to generate gas, the piston 114 and the plurality of balls 115 within the pipe 111 of the pretensioner 100 are pushed by the pressure of gas. As a result, the pins 117 are sheared by pressing force of the balls 115, whereby the holding of the ring gear 118 is released and internal teeth 118b of the ring gear 118 and external teeth 120a of the pinion 120 are meshed with each other, that is, the coupled state of the clutch mechanism. As the external teeth 118a of the ring gear 118 are forced by the balls 115 so as to rotate the ring gear 118, the spool 102 is rotated via the pinion 120 coupled with the ring gear 118. In this manner, the belt S is pretensioned.

### [Problems to be resolved by the Invention]

By the way, the seat belt retractor as mentioned above has problems as follows.

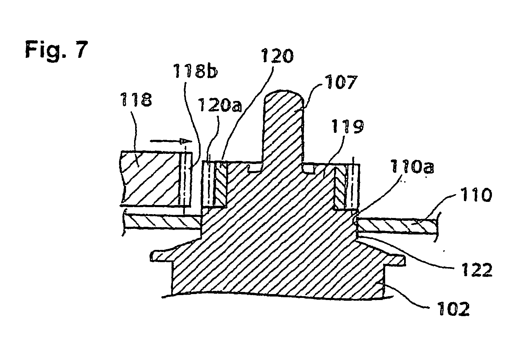

As shown in Fig. 7, a shaft portion 122 of the spool 102 is inserted into and thus held by a hole 110a of the pretensioner plate 110 of the pretensioner 100. Since the shaft portion 122 of the spool 102 is directly held by the pretensioner plate 11, the spool 102 is directly strongly pressed against the pretensioner plate 110 because of great impact produced when the ring gear 118 and the pinion 120 are meshed with each other (coupled with each other). As a result, the shaft portion 122 of the spool 102 may be deformed because the spool 102 is made of aluminium while the pretensioner plate 110 is made of steel. In the deformed state, there is a possibility that the power transmitting function of the pretensioner 100 is spoiled.

The present invention was made to solve the aforementioned problems and the object of the invention is to provide a seat belt retractor which enables to stabilize the performance of the pretensioner.

### [Means to Solve the Problems]

According to the present invention, this object is achieved by a seat belt retractor as defined in claim 1. The dependent claims define a preferred and advantageous embodiment of the present invention.

To solve the aforementioned problems, a seat belt retractor of the present invention comprises the features mentioned in claim 1.

According to the present invention, when great impact is applied during the clutch mechanism becomes in or is transferred to its coupled state, the impact is transmitted to the spool through the bearing. Therefore, the spool is prevented from being deformed, thereby further stabilizing the performance of the pretensioner.

In the seat belt retractor of the present invention, the pretensioner comprises: a gas generator; a plurality of serial driving members which will be accelerated by gas generated from the gas generator; a path for guiding the driving members; a first rotational member having a plurality of driving points (levers), wherein the driving members collide with the driving points so as to apply rotational torque to the first rotatable member; a second rotational member fixed to the spool; and a clutch mechanism defined by the first rotational member and the second rotational member, wherein the second rotational member is a pinion having external teeth; the first rotational member is a ring gear having internal teeth capable of being meshed with the external teeth of the pinion and the driving points around the outer periphery thereof; wherein the clutch mechanism becomes in or is transferred to its coupled state where the internal teeth of the ring gear are meshed with the external teeth of the pinion by the accelerated driving members pushing the driving points of the ring gear so as to move the ring gear; and wherein the clutch mechanism is in its decoupled state before the activation of pretensioner and becomes in or is transferred to its coupled state by the rotation of the first rotational member when the pretensioner is activated (in the event of a vehicle collision).

### [Embodiments for carrying out the Invention]

Hereinafter, the present invention will be described with reference to the attached drawings.

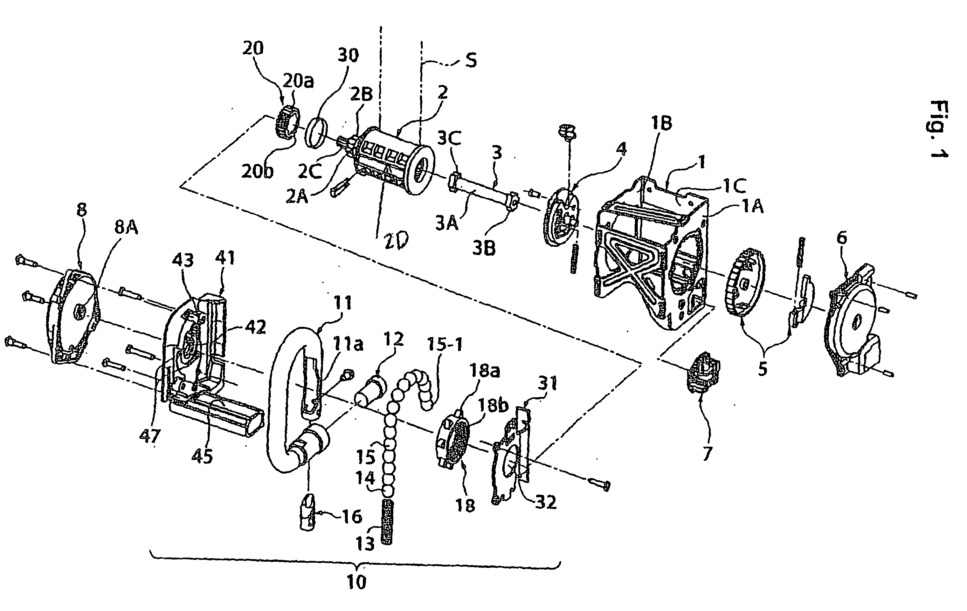

Fig. 1 is an exploded perspective view showing a seat belt retractor according to an embodiment of the present invention.

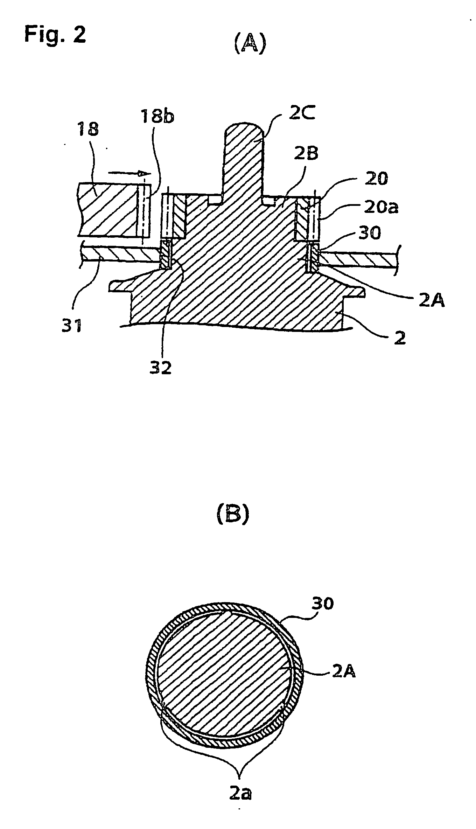

Fig. 2(A) is a sectional view, taken along the axis of a spool, showing a clutch mechanism portion of the seat belt retractor of Fig. 1, and Fig. 2(B) is a sectional view taken along in the radial direction of the shaft portion of the spool.

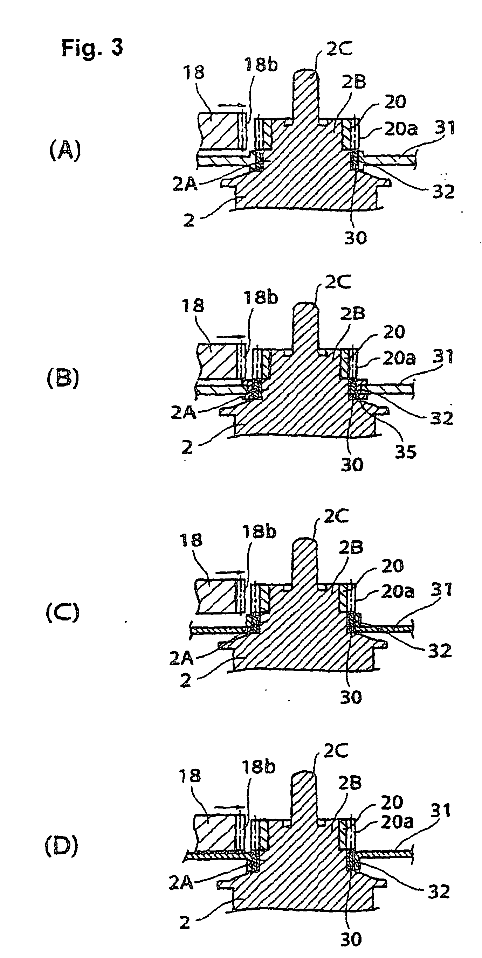

Figs. 3(A)-3(D) are sectional views each showing a variation of the clutch mechanism portion of the seat belt retractor.

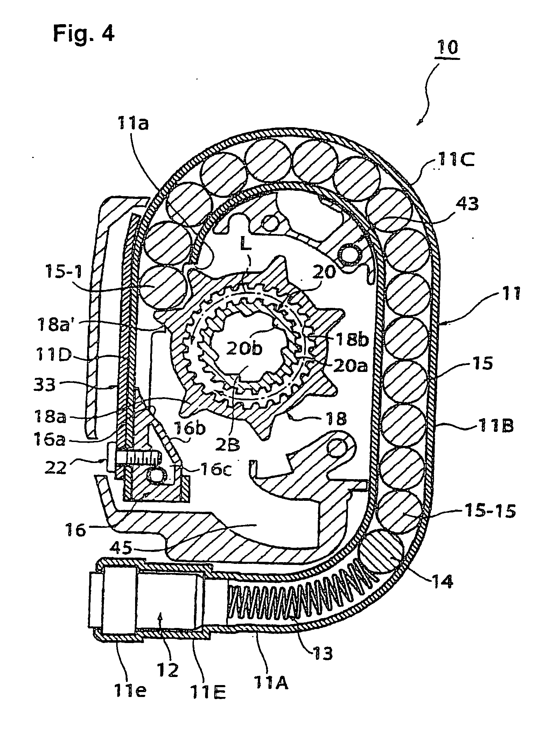

Fig. 4 is a frontal sectional view of a pretensioner of the seat belt retractor according to the embodiment of the present invention, showing the state before the activation.

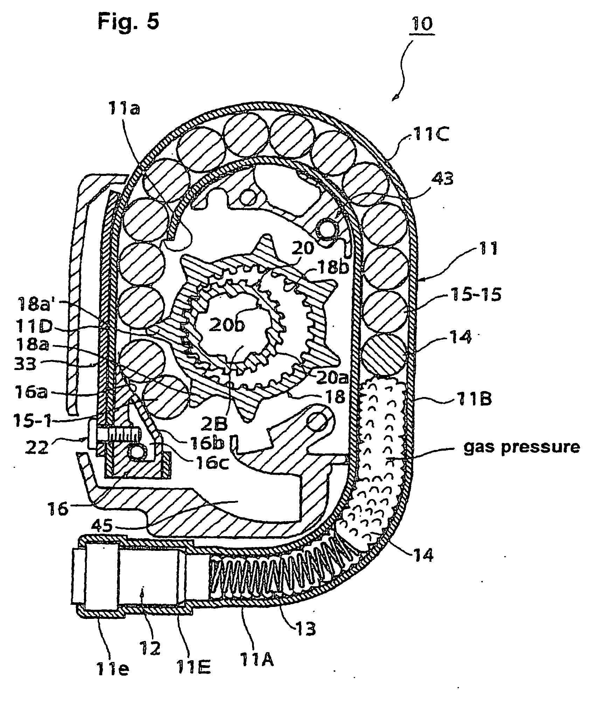

Fig. 5 is a frontal sectional view of the pretensioner, showing the state just after the activation.
Fig. 6 is an exploded perspective view showing one example of a seat belt retractor.
Fig. 7 is a sectional view, taken along the axis of a spool, showing a clutch mechanism portion of the seat belt retractor of Fig. 6.

The present invention is characterized by a spool bearing 30 interposed between a spool 2 for winding a belt S thereon and a pretensioner plate 31 of a pretensioner 10. Besides this, as shown in Fig. 1, the basic structure of the seat belt retractor includes the following components:
(1) a base 1;
(2) the spool 2 for winding the belt S thereon;
(3) a torsion bar 3 fixed to the spool 2 to extend along the axis of the spool 2;
(4) locking mechanisms 4, 5 for preventing the rotation of the spool 2 in the belt withdrawing direction during the emergency locking operation; and a retainer 6 for supporting one end 3B of the torsion bar 3 via the locking mechanisms 4, 5;
(5) a deceleration detecting device 7 for detecting deceleration of a vehicle;
(6) a pretensioner 10 for rapidly rotating the spool 2 in the belt-winding direction in the event of a vehicle collision; and a clutch mechanism additionally provided for the pretensioner 10; and
(7) a return spring 8 for biasing the spool 2 in the belt-winding direction.

Hereinafter, description will be made as regard to the structure of the seat belt retractor according to the embodiment of the present invention.

### (1) Base 1

As shown in Fig. 1, the base 1 comprises a pair of side walls 1A, 1B arranged in parallel, and a back plate 1C connecting the side walls 1A, 1B. The base 1 is, for example, a press product made of a steel plate. The spool 102 on which the belt S is wound is disposed between the both side walls 1A and 1B of the base 1. Further disposed on the side wall 1A is the deceleration detecting device 7.

### (2)Spool 2

As shown in Fig. 1, the spool 2 has a drum-like shape. A shaft portion 2A, a spool gear 2B, and a spring-biased shaft projection 2C are disposed to project from the left end face (the left side in Fig. 1) of the spool 2. As best seen in Fig. 2(A), a spool bearing (ring-like collar) 30 is fitted around the shaft portion 2A of the spool 2. The spool bearing 30 is made of a material having high hardness and high rigidity such as SUS, SPCC (SPHC), or SC. The spool bearing 30 may be surfaced with low friction coating.

As shown in Fig. 2(B), ribs 2a are formed at three locations around the outer periphery of the shaft portion 2A of the spool 2. The ribs 2a are in contact with the inner surface of the spool bearing 30. Therefore, the spool bearing 30 and the spool 2 are strongly coupled to each other just like one unit, thereby preventing the backlash of the spool 2 during the normal operation (during rotation for withdrawing or winding up the belt S). By this spool bearing 30, the spool 2 is prevented from being directly subjected to load, like a bearing.

The spool gear 2B of the spool 2 projects outside from the side wall 1B of the base 1. As shown in Fig. 2(A), a pinion 20 composing a clutch mechanism inside the pretensioner 10 is fitted around the spool gear 2B. The spring-biased shaft projection 2C is inserted into a bush hole 8A (see Fig. 1) of a cover of the return spring 8. The return spring 8 applies a biasing force onto the spring-biased shaft projection 2C. The spool 2 is also provided with a hole 2D extending in the axial direction thereof as shown in Fig. 1. The torsion bar 3 is arranged inside the hole 2D.

### (3) Torsion Bar 3

As shown in Fig. 1, the torsion bar 3 comprises a bar portion 3A and hexagonal ends 3B, 3C on the both ends of the bar portion 3A. In the assembled state, one of the hexagonal ends 3B (the right end in Fig. 1) is fitted and fixed to a central portion of the back surface (a hidden surface in Fig. 1) of the locking mechanism 4. The other hexagonal end 3C is fitted and fixed to a portion inside the spool gear 2B of the spool 2. The torsion bar 3 is twisted for limiting the belt load in the event of a vehicle collision, thereby exhibiting a function of Energy Absorption (EA).

### (4) Locking Mechanisms 4, 5 and Retainer 6

The locking mechanisms 4, 5 and the retainer 6 shown in Fig. 1 are arranged on the side wall 1A side of the base 1 in the assembled state of the seat belt retractor.

### (5) Deceleration Detecting Device 7

The deceleration detecting device 7 shown in Fig. 1 is mounted on the side wall 1A of the base 1.

### (6) Pretensioner 10 and Clutch mechanism

The pretensioner 10 will now be described with reference mainly to Fig. 1, Fig. 4, and Fig. 5.

The pretensioner 10 comprises a pipe 11. The pipe 11 is interposed between the pretensioner cover 41 and the pretensioner plate 31 and, in this state, is attached to the outside of a side wall of the base 1. The pipe 11 is a steel pipe which is processed by bending (as an example). As best seen in Fig. 4 and Fig. 5, the pipe 11 continuously extends from the proximal end 11A at the bottom side in the drawings to a straight portion 11B. The portion between the proximal end 11A and the straight portion 11B is bent at approximately 90° from the proximal end 11A toward the upper right. The pipe 11 further continuously extends from the straight portion 11B to a semi-circular portion 11C at the top side in the drawings. The pipe 11 further extends downwardly from the semi-circular portion 11C to a straight portion 11D. Formed in the straight portion 11D is a cut-out 11a facing an area surrounded by the pipe 11. One or more of external teeth 18a of a ring gear 18, described later, are partially positioned inside the cut-out 11a.

The ring gear 18 is arranged in the area surrounded by the pipe 11 (this area will be referred to as "the inner area of the pipe 11"). The ring gear 18 is held at a predetermined position in the inner area of the pipe 11 by two pins 42 of the pretensioner cover 41. Also arranged inside the ring gear 18 is the pinion 20. The pinion 20 has external teeth 20a formed around the outer periphery thereof and internal teeth 20b formed around the inner periphery thereof. The pinion 20 is fixedly fitted around the spool gear 2B of the spool 2 (see Fig. 2(A)).

Formed around the inner periphery of the ring gear 18 are inner teeth 18b capable of meshing with the external teeth 20a of the pinion 20. Since the inner diameter of the ring gear 18 is larger than the outer diameter of the pinion 20, a clearance is ensured between the internal teeth 18b of the ring gear 18 and the external teeth 20a of the pinion 20 so that the ring gear 18 and the pinion 20 are out of mesh in the state shown in Fig. 4. Therefore, the spool 2 can freely rotate, in spite of the existence of the pretensioner 10. This state means the decoupled state of a clutch mechanism composed of the ring gear 18 and the pinion 20.

The ring gear 18 has a plurality of external teeth 18a formed around the outer periphery thereof. The external teeth 18a project outwardly just like projections (the number of the teeth is seven in the illustrated example). Though the respective external teeth are equally spaced, only the tooth marked by numeral 18a' is offset. The offset tooth 18a' is positioned inside the cut-off 11a of the straight portion 11D of the pipe 11 and is in contact with the front-most ball 15-1 (described later) in the pipe 11.

Formed at the proximal end 11A of the pipe 11 is a generator-housing portion 11E of which diameter is slightly larger than that of the pipe 11. A gas generator 12 is housed in the generator-housing portion 11E. The gas generator 12 ignites explosive therein according to a signal outputted from a collision detecting means (not shown) in the event of an accident such as a vehicle collision so as to supply gas pressure into the pipe 11. The gas generator 12 is fixed by a crimped flange portion 11e after inserted in the generator-housing portion 11E.

Arranged inside the pipe 11 are, in the order from the gas generator 12, a coil spring 13, a piston 14, and a plurality of balls 15 (15 balls in the illustrated example). Each ball 15 is a sphere made of metal such as steel. Each ball 15 may be surfaced with low frictional coating. The outer diameter of the ball 15 is slightly smaller than the inner diameter of the pipe 11, thus allowing relative smooth movement of the balls inside the pipe 11. The front-most ball 15-1 is in contact with the external tooth 18a' of the ring gear 18.

The piston 14 is made of resin such as silicone rubber. The piston 14 is deformed to increase its diameter after the discharge of gas so that the piston 14 comes in close contact with the inner surface of the pipe 11, thereby achieving sealing function for preventing gas from leaking to the distal end (the other end) side.

The coil spring 13 is disposed between the gas generator 12 and the piston 14 to bias the piston 14 in a direction toward the distal end. Because of the biasing force of the coil spring 13, the front-most ball 15-1 is in contact with the external tooth 18a' of the ring gear 18.

A guide block 16 is attached to the end of the straight portion 11D of the pipe 11 by a vis 22. The guide block 16 is a cylindrical member having a slant end face which is formed by obliquely cutting. This slant end face functions as a guide face. The guide face comprises a first guide face 16a and a second guide face 16b. The first guide face 16a is formed at the top end of the guide block into an arc shape substantially concentrical with the ring gear 18. During the actuation of the pretensioner, balls 15 are forced out of the pipe 11 and then collide with the first guide face 16a. On the other hand, the second guide face 16b is a flat face which extend in such a way as to gradually increase the distance from the ring gear 18.

It should be noted that the vis 22 also has the function of fixing the pipe 11 to the pretensioner plate 31.

The guide block 16 has a through opening 16c which is formed through it to extend from one side to the opposite side along the width direction of the guide face. The through opening 16c is formed in a portion substantially beneath the second guide face 16b. Because of this through opening 16c, most of the second guide face 16b is a thin plate so that the second guide face 16b has poor rigidity. On the other hand, the first guide face 16a has high rigidity because it is backed up by the side walls of the guide block 16 itself.

As shown in Fig. 1, the pretensioner plate 31 is a hardware interposed between the pipe 11 and the outside of the side wall 1B of the base 1. The pretensioner plate 31 is provided with a through hole 32 at substantially the center thereof. As best seen in Fig. 2(A), the shaft portion 2A of the spool 2 around which the spool bearing 30 is fitted is positioned inside the through hole 32.

The peripheral edge of the through hole 32 of the pretensioner plate 31 may be formed to have a wider area as shown in Figs. 3(A)-3(D). Therefore, the contact area between the peripheral edge of the through hole 32 of the pretensioner plate 31 and the outer periphery of the spool bearing 30 can be increased, thereby reducing the bearing stress.

Fig. 3(A) is a sectional view showing an example in which the peripheral edge of the through hole 32 of the pretensioner plate 31 is formed to have a T-shaped section.

Fig. 3(B) is a sectional view showing an example in which the peripheral edge of the through hole 32 of the pretensioner plate 31 is covered by a ring member 35 having a channel-shaped section which is made of metal (preferably made of iron). It should be noted that the ring member 35 may have a configuration extending only a range indicated by a mark L in Fig. 4 (where force is exerted during the activation of the pretensioner), besides a configuration extending the whole periphery of the through hole 32. This configuration facilitates assembly of the ring member 35 to the through hole 32, as compared to the entire ring configuration.

Fig. 3(C) is a sectional view showing an example in which the peripheral edge of the through hole 32 of the pretensioner plate 31 is bent toward the ring gear 18.

Fig. 3(D) is a sectional view showing an example in which the peripheral edge of the through hole 32 of the pretensioner plate 31 is bent in a direction opposite to that in Fig. 3(C).

The pretensioner cover 41 shown in Fig. 1 is an aluminium product made of die casting and is provided with a through hole 42 formed at substantially the center thereof. The spring-biased shaft projection 2C of the spool 2 is inserted into the through hole 42. The pretensioner cover 41 has a pipe guide 43 formed on a pipe-side surface thereof. As shown in Fig. 4 and Fig. 5, the pipe guide 43 retains the pipe 11 from the inner area of the pipe 11 to guide the semi-circular portion 11C of the pipe 11. The pretensioner cover 41 further has two pins 47 studded to the pipe-side surface thereof. The ring gear 18 is held in its predetermined position in the inner area of the pipe 11 by the two pins 47. The pretensioner cover 41 is provided with a ball receiving portion 45 formed on a lower part thereof. Balls 15 forced out of the pipe 11 are received and gathered in the ball receiving portion 45.

### (7) Return Spring 8

The return spring 8 shown in Fig. 1 is housed in a cover. The cover for the return spring 8 has a bush hole 8A formed at the center thereof. The spring-biased shaft projection 2C of the spool 2 is fitted in the bush hole 8A not to allow relative rotation because they are engaged with each other through splines. The spool 2 is always biased in the belt-winding direction by the return spring 8.

Hereinafter, the works of the pretensioner 10 having the aforementioned structure will be described with regard to the characteristics of the present invention.

When the pretensioner is not actuated (in the normal state), the ring gear 18 is held in its predetermined position in the inner area of the pipe 11 by the two pins 47 (see Fig. 1) of the pretensioner cover 41 and the ring gear 18 is not meshed with the pinion 20 as shown in Fig. 4. Therefore, the spool 2 freely rotate regardless of the pretensioner 10.

As a vehicle collision is detected, a signal is transmitted to the gas generator 12. According to this signal, as shown in Fig. 5, the gas generator 12 is activated to supply gas pressure into the pipe 11. The piston 14 which is nearest to the gas generator 12 is pushed by the gas pressure. The plurality of balls 15 are subsequently pushed by the pushing force of the piston 14. Thus, the force is transmitted to the front-most ball 15-1 (which is in contact with the external tooth 18a' of the ring gear 18). During this, the gas pressure deforms and increase the diameter of the piston 14 so that the piston 14 functions as seal relative to the inner surface of the pipe 11, thereby preventing gas from leaking to the distal end side.

The force transmitted through the balls 15 is exerted on the ring gear 18. As a result of this, the pins 47 (see Fig. 1) are sheared so as to release the ring gear 18. Therefore, the ring gear 18 moves to the pinion 20, whereby the internal teeth 18b of the ring gear 18 are meshed with the external teeth 20a of the pinion 20. The ring gear 18 is rotated about the shaft of the pinion 20 by the force of the balls 15 pushing the external teeth 18a. Before the ring gear 18 starts to move, the front-most ball 15-1 is in contact with the external tooth 18a' of the ring gear 18 in such an attitude of applying torque to the external tooth 18a', thereby ensuring the rotation of the ring gear 18.

During the ring gear 18 and the pinion 20 are meshed with each other, the ring gear 18 is pushed by the driving force of the balls 15, whereby great impact is exerted to the spool 2 side. The impact is transmitted to the spool 2 through the spool bearing 30. Therefore, the impact is not directly exerted to the spool 2, thereby preventing the shaft portion 2A of the spool 2 from being deformed.

As the balls 15 are subsequently pushed out by the gas pressure, each ball 15 falls in a corresponding one of valleys formed between the external teeth 18a of the ring gear 18. In this case, one valley of the ring gear 18 corresponds to and is engaged with two balls 15. The engagements of the balls 15 rotates the ring gear 18 in the counter-clockwise direction in Fig. 5. Since the external teeth 20a of the pinion and the internal teeth 18b of the ring gear 18 are meshed with each other, the rotation of the ring gear 18 is transmitted to the pinion 20 so that the ring gear 18 and the pinion 20 move with each other. Since the pinion 20 is fitted to the spool gear 2B of the spool 2, the spool 2 rotates with the pinion 20, thereby immediately taking up some length of the seat belt S (see Fig. 1) in the belt-winding direction. The balls 15 are forced out of the pipe 11 through the end opening 21b of the pipe 11 and are gathered into the ball receiving portion 45 of the pretensioner cover 41.

### [Effects of the Invention]

As described above, the present invention can stabilize the performance of the pretensioner.

## Claims

1. A seat belt retractor comprising
a spool (2) for winding up a seat belt (S);
a clutch mechanism arranged on one end of said spool (2);
a pretensioner (10) disposed adjacent to said clutch mechanism; and
a frame (1) holding said spool (2) rotatably,
a bearing (30) fitted around a shaft portion (2A) of said spool (2) held by said frame (1) and positioned inside a through hole (32) of a pretensioner plate (31) of said pretensioner (10)
**characterized in that**
said spool (2) is made of a light alloy, and the bearing is made of steel.

2. A seat belt retractor as claimed in claim 1,
**characterized in that**
said pretensioner (10) comprises:
a gas generator (12);
a plurality of serial driving members (15) which will be accelerated by gas generated from said gas generator (12);
a path (11) for guiding said driving members (15);
a first rotational member (18) having a plurality of driving points (18a), wherein said driving members (15) collide with said driving points (18a) so as to apply rotational torque to said first rotatable member (18);
a second rotational member (20) fixed to said spool (2); and
a clutch mechanism defined by said first rotational member (18) and said second rotational member (20), wherein
said second rotational member (20) is a pinion having external teeth (20a);
said first rotational member (18) is a ring gear having internal teeth (18b) capable of being meshed with the external teeth (20a) of said pinion (20) and the driving points (18a) around the outer periphery thereof;
said clutch mechanism is transferred in its coupled state where the internal teeth (18b) of said ring gear (18) are meshed with the external teeth (20a) of said pinion (20) by that said accelerated driving members (15) push the driving points (18a) of said ring gear (18) so as to move said ring gear;
said clutch mechanism is in its decoupled state before the activation of pretensioner (10) and is transferred in its coupled state by the rotation of said first rotational member (18) when the pretensioner (10) is activated.

3. A seat belt retractor as claimed in claim 2,
**characterized in that**
said driving points (18a) of said first rotational member (18) are levers of said first rotational member (18).

4. A seat belt device comprising
a seat belt (S); and
a seat belt retractor according to any one of the preceding claims.

## Patentansprüche

1. Sicherheitsgurtaufroller umfassend
eine Spule (2) zum Aufwickeln eines Sicherheitsgurts (S);
eine Kupplungseinrichtung, welche an einem Ende der Spule (2) angeordnet ist;
einen Straffer (10), welcher benachbart zur Kupplungseinrichtung angeordnet ist; und
einen Rahmen (1), welcher die Spule (2) drehbar hält,
ein Lager (30), welches um einen Wellenabschnitt (2A) der Spule (2) aufgepasst ist, die durch den Rahmen (1) gehalten wird und in einem Durchgangsloch (32) einer Strafferplatte (31) des Straffers (10) angeordnet ist,
**dadurch gekennzeichnet,**
**dass** die Spule (2) aus einer leichten Legierung gefertigt ist, und dass das Lager aus Stahl gefertigt ist.

2. Sicherheitsgurtaufroller nach Anspruch 1,
**dadurch gekennzeichnet,**
**dass** der Straffer (10) umfasst:
einen Gasgenerator (12);
eine Mehrzahl von aufeinanderfolgenden Antriebselementen (15), welche durch vom Gasgenerator (12) erzeugtes Gas beschleunigt werden;
einen Pfad (11) zum Führen der Antriebselemente (15);
ein erstes Drehelement (18), welches eine Mehrzahl von Antriebspunkten (18a) aufweist, wobei die Antriebselemente (15) mit den Antriebspunkten (18a) so zusammenstoßen, dass sie ein Drehmoment auf das erste drehbare Element (18) ausüben;
ein zweites Drehelement (20), welches an der Spule (2) befestigt ist; und
eine Kupplungseinrichtung, welche durch das erste Drehelement (18) und das zweite Drehelement (20) definiert ist, wobei
das zweite Drehelement (20) ein Ritzel ist, welches äußere Zähne (20a) aufweist;
wobei das erste Drehelement (18) ein Zahnkranz ist, welcher innere Zähne (18b), die mit den äußeren Zähnen (20a) des Ritzels (20) in Eingriff gebracht werden können, und die Antriebspunkte (18a) um seinen Außenumfang herum aufweist;
wobei die Kupplungseinrichtung **dadurch** in ihren gekoppelten Zustand übergeführt wird, in welchem sich die inneren Zähne (18b) des Zahnkranzes (18) in Eingriff mit den äußeren Zähnen (20a) des Ritzels (20) befinden, dass die beschleunigten Antriebselemente (15) die Antriebspunkte (18a) des Zahnkranzes (18) so voranschieben, dass sie den Zahnkranz bewegen;
wobei die Kupplungseinrichtung vor der Aktivierung des Straffers (10) in ihrem entkoppelten Zustand ist und durch die Drehung des ersten Drehelements (18) in ihren gekoppelten Zustand übergeführt wird, wenn der Straffer (10) aktiviert ist.

3. Sicherheitsgurtaufroller nach Anspruch 2,
**dadurch gekennzeichnet,**
**dass** die Antriebspunkte (18a) des ersten Drehelements (18) Hebel des ersten Drehelements (18) sind.

4. Sicherheitsgurtvorrichtung umfassend
einen Sicherheitsgurt (S); und
einen Sicherheitsgurtaufroller nach einem der vorhergehenden Ansprüche.

## Revendications

1. Un rétracteur ou prétensionneur de ceinture de sécurité comprenant
- une bobine (2) pour enrouler une ceinture de sécurité (S) ;
- un mécanisme d'accouplement agencé sur une extrémité de ladite bobine (2) ;
- un prétendeur (10) disposé à côté dudit mécanisme d'accouplement ;
- et un cadre (1) retenant ladite bobine (2) de façon rotative,
- un palier (30) installé autour d'une partie d'arbre (2A) de ladite bobine (2), maintenu par ledit cadre (1) et positionné à l'intérieur d'un trou débouchant (32) d'une plaque de prétendeur (31) dudit prétendeur (10),
**caractérisé en ce que**
- ladite bobine (2) est faite d'un alliage léger, et le palier est fait d'acier.

2. Un rétracteur de ceinture de sécurité selon la revendication 1, **caractérisé en ce que** ledit prétendeur (10) comprend :
- un générateur de gaz (12) ;
- une pluralité d'éléments d'entraînement en série (15) qui seront accélérés par le gaz généré à partir dudit générateur de gaz (12) ;
- un passage (11) pour guider lesdits éléments d'entraînement (15) ;
- un premier élément rotatif (18) ayant une pluralité de points d'entraînement (18a), et dans lequel lesdits éléments d'entraînement (15) entrent en collision avec lesdits points d'entraînement (18a) afin d'appliquer un couple de rotation audit premier élément rotatif (18) ;
- un second élément rotatif (20) fixé à ladite bobine (2) ; et
- un mécanisme d'accouplement défini par ledit premier élément rotatif (18) et ledit second élément rotatif (20),
rétracteur dans lequel :
- ledit second élément rotatif (20) est un pignon ayant une denture extérieure (20a) ;
- ledit premier élément rotatif (18) est une couronne dentée ayant une denture intérieure (18b) capable d'être engrenée avec la denture extérieure (20a) dudit pignon (20) et les points d'entraînement (18a) autour de la périphérie extérieure de celui-ci ;
- ledit mécanisme d'accouplement est transféré dans sa condition couplée où la denture intérieure (18b) de ladite couronne dentée (18) est engrenée avec la denture extérieure (20a) dudit pignon (20), lesdits éléments d'entraînement accélérés (15) poussant les points d'entraînement (18a) de ladite couronne (18) afin de déplacer ladite couronne ;
- ledit mécanisme d'accouplement est dans sa condition découplée avant l'activation du prétendeur (10) et est transféré dans sa condition couplée par la rotation dudit premier élément rotatif (18) lorsque le prétendeur (10) est activé.

3. Un rétracteur de ceinture de sécurité selon la revendication 2, **caractérisé en ce que** lesdits points d'entraînement (18a) dudit premier élément rotatif (18) sont des leviers dudit premier élément rotatif (18).

4. Un dispositif de ceinture de sécurité comprenant :
- une ceinture de sécurité (S) ; et
- un rétracteur de ceinture de sécurité selon l'une quelconque des revendications précédentes.
